# EUROPEAN PATENT APPLICATION

(11) **EP 1 704 775 A1**
(43) Date of publication of application: **27.09.2006**
(21) Application number: 06251610.9
(22) Date of filing: 24.03.2006
(51) Int. Cl.: A01K 39/00

(54) **Bird feeder accessory**

(30) Priority: 24.03.2005 GB 0506022
(71) Applicant: C J Wildbird Foods Limited, Shrewsbury SY4 4UR (GB)
(72) Inventor: Nock, Robert Kenneth c/o C J Wildbirds Foods Ltd, Shrewsbury, SY4 4UR (GB)
(74) Representative: Barnfather, Karl Jon

(57) **Abstract**

A bird feeder hanger having a main body with at least one suction cup (16) attached thereto and further comprising at least one arm (18) that extend from the front face or side walls of the main body and in use engages an aperture or grid mesh hole (H) of a conventional tubular bird feeder body using snap-fit engagement means (20).

## Description

This invention relates to a bird feeder accessory and in particular a hanger suitable for attachment to vertical surfaces.

Bird feeders typically comprise a tubular body for storing birdfood and have a pair of diametrically opposed apertures near the top of the tubular body which houses a pivot rod to which is attached a generally "U-shaped" hanger rod. This arrangement conveniently allows the bird feeder to be hung from a tree branch using such a hanger arrangement.

It has been found that birds will use such birdfeeders hung adjacent the exterior of the glass pane of a house window. However, conventional hangers as described above are not well suited for such mounting. It is therefore an object of the present invention to provide a bird feeder hanger suited for attachment to a flat vertical surface such as a window. A further object of the invention is to provide a hanger that can be used with most existing birdfeeders without requiring any modification of the bird feeder itself. A further object is to provide a hanger that can be used with a bird feeder that has a main body comprising an open wire mesh.

In one aspect the invention comprises a bird feeder hanger having a main body with at least one suction cup attached thereto and further comprising at least one arm member extending from said main body; wherein snap-fit means are provided on said arm that in use engages an aperture or grid mesh hole located on a conventional bird feeder body. The snap-fit means allows a bird feeder to readily be attached and detached from the hanger.

Preferably, the snap fit means comprise a member with a head, a stem and at least one axial slot in the head and stem in order to provide resilience. Preferably the head is conical or frustro-conical in shape.

Preferably the hanger comprises either one or a pair of arcuate arzns that extend from the front face or side walls of the main body and in use engage diametrically oppose apertures or grid mesh holes of a conventional tubular bird feeder body. The two arms may together form a semi-circular member. This allows a cylindrically shaped bird feeder body to be firmly held between these arms and the main body such that in use the bird feeder body cannot easily pivot; for example when a bird lands upon it.

The hanger may comprise a main body having an elongate member with a "U-shaped" cross section. Several suction cups may be attached to the rear side of this main body.

The hanger may comprise a single arm wherein the snap-fit retaining means is provided, in use, to engage that end of the arm most distant from the main body.

The invention may employ an ann or a pair of arcuate arms that extend outwardly sideways of the main body and that in use prevent pivotal movement of an attached bird feeder.

Embodiments of the invention will now be described by reference to the following diagrammatic figures in which:
Figure 1 is a plan view of a hanger according to the invention shown holding a bird feeder main body;
Figure 2 is an enlarged view of part of Figure 1;
Figure 3 is a side view corresponding to Figure 1;
Figure 4 is a front view of the hanger of Figure 1, alone without any suction cups;
Figure 5 is a rear view corresponding to Figure 4;
Figure 6 is a front view of a second embodiment of the invention;
Figure 7 is a plan view corresponding to Figure 6;
Figure 8 shows a plan view of a third embodiment of the invention with a cylindrical bird feeder attached;
Figure 9 is an enlarged view of part of Figure 8;
Figure 10 shows a plan view of a hanger according to a fourth embodiment of the invention, without its suction cup;
Figure 11 shows a plan view of a hanger according to a fifth embodiment of the invention, without its suction cup; and
Figure 12 shows a plan view of a hanger according to a sixth embodiment of the invention, without its suction cup.

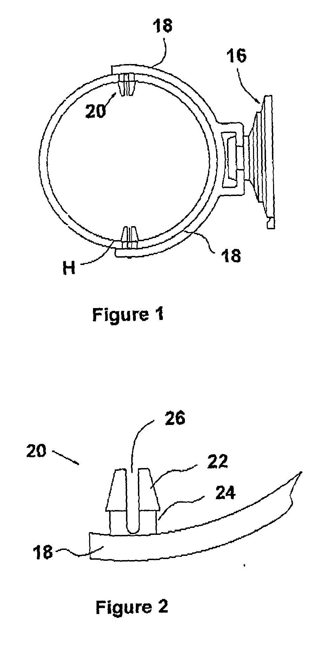

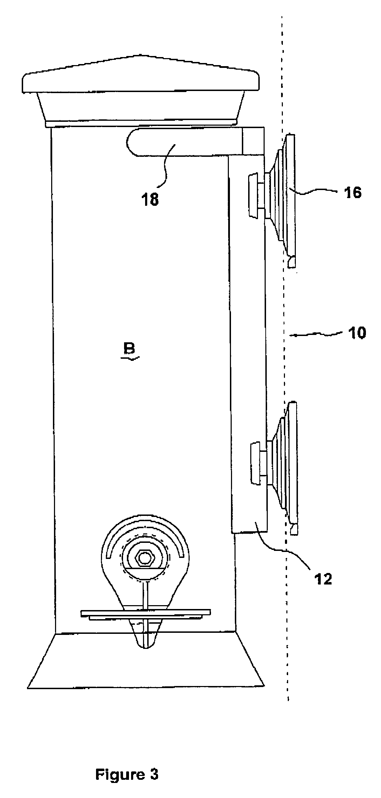

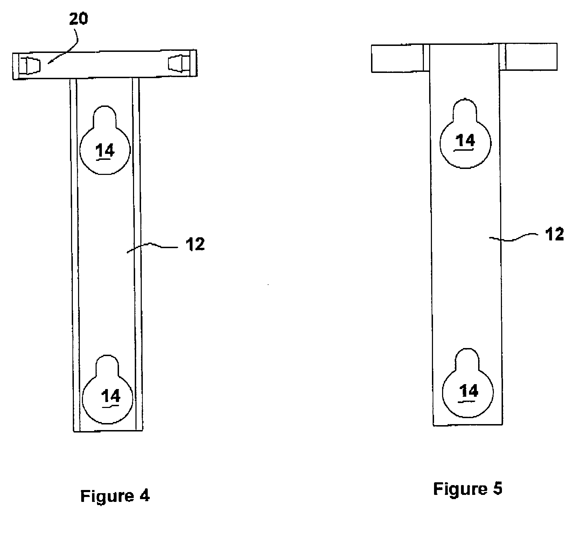

Figures 1 and 3 show a hanger 10 according to a first embodiment of the invention with a conventional cylindrically shaped bird feeder B attached. Figures 4 and 5 show the same hanger without a bird feeder body attached and without suction stickers attached. The hanger 10 comprises a main body 12 having a generally U-shaped cross section and a pair of apertures 14 (see Figures 4 and 5) configured to allow standard resilient suction cups 16 to be slid therein. A generally semicircular arm comprising arcuate portions 18 depends forwardly and outwardly from the upper part of main body 12; is preferably integrally formed with the main body 12; together arcuate portions 18 providing in use a holding bracket for bird feeder B. Arcuate portions 18 have a curvature to match that of the outer surface of a cylindrical bird feeder body and in use preferably prevent pivotal movement of an attached bird feeder. A snap-fit engagement member 20 (see Figure 2) depends inwardly from the end of each arm 18 most distant from the main body 12. Engagement member 20 comprises a conically shaped head 22 attached to the distal end of arm 18 by an intermediate cylindrical stem 24.

Circular holes H provided in a bird feeder main body B for a hanger pivot rod are typically used to allow the hanger to firmly engage the bird feeder body. Thus, the hanging rod normally located through holes H is removed before attaching the hanger of the invention. An axial slot 26 is provided through head 22 and stem 24 in order to provide resilience, such that when the heads 22 are pushed into holes H in the bird feeder main body the conical portion momentarily collapses in an axial direction before expanding in a reverse direction to engage hole H is a snap-fit manner. While the present embodiment has a single axial slot 26 two or more such slots may be used; for example 3 slots each arranged at 120° to each other. Preferably, the snap-fit engagement member 20 (at least) is made from a plastics material such as nylon or polypropylene. Alternatively, the resilience required to provide the snap fit means can be providing arms 18 made of a suitably resilient material such as nylon or polypropylene. In this case snap fit means 20 can be replaced by a simple stub or the like that engages hole H.

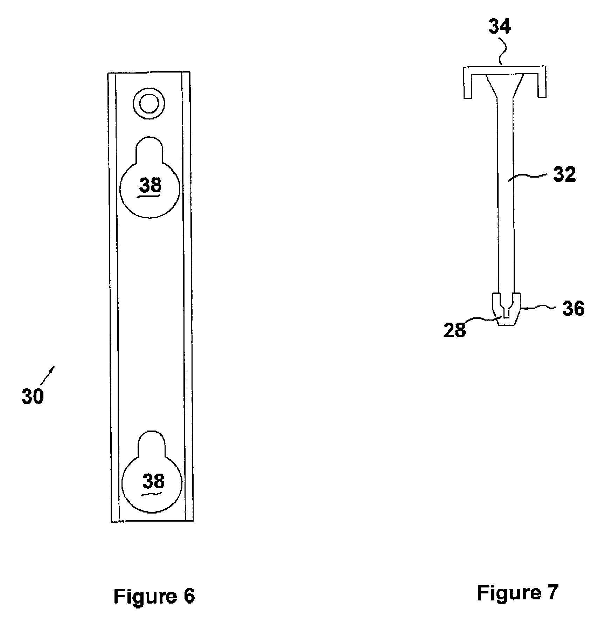

Figures 6 and 7 show a further hanger 30 according to a second embodiment of the invention that may have only a single arm 32 depending from the front face of a main body 34 which again has a U-shaped cross section. Arm 32 has an enlarged diameter fmstroeonicai portion at the end that joins main body 34. At the distal end of arm 32 there is recess or the like 42 that in use engages a snap-fit retaining member 36. Snap fit member 36 comprises a cylindrical portion and a conical or fiustro conical portion and member 36 has a slot 28 extending part way axially within to provide resilience. Again apertures 38 are provided so that suction cups (not shown) can be attached to the main body as in the first embodiment.

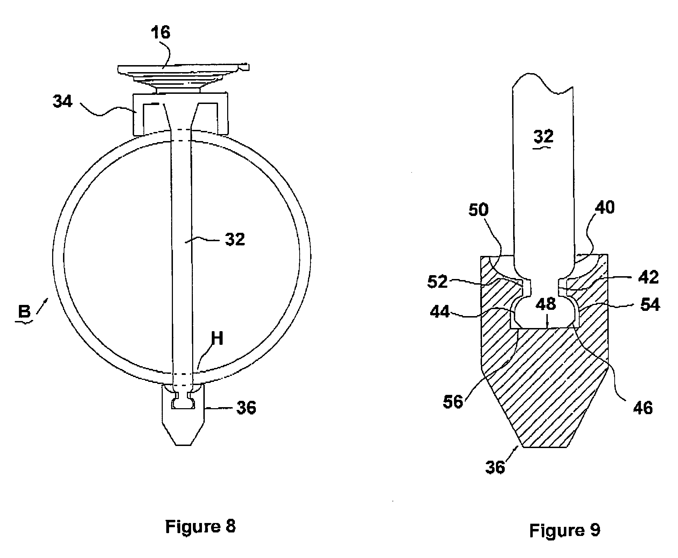

Figures 8 and 9 show a hanger according to a third embodiment of the invention that differs from the above described second embodiment in respect of the configuration of the snap fit means. Figure 9 shows an enlarged view of the snap fit means; thus distal end of arm 32 comprises curved peripheral portion 40, leading to cylindrical portion 42, then further curved peripheral portion 44, leading to annular inclined face 46; the arm 32 terminating in flat end face 48. The slot 28 used in the second embodiment has been replaced by an axially symmetrical recess that comprises portions 50, 52, 54 and bottom face 56; these portions being dimensioned to allow a snap fit when member 36 is made of a suitably resilient material such as nylon or polypropylene etc.. During engagement of arm 32 and member 36, face 46 abuts against the junction of faces 50 and 52 forcing the member 36 to axially expand during insertion of the distal portion of arm 32.

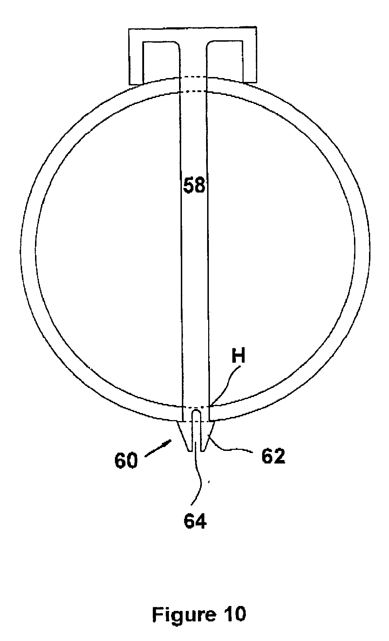

Figure 10 shows a plan view of a conventional bird feeder attached to a hanger according to a fourth embodiment of the invention where the snap fit means 60 generally takes the form of snap fit means 20 described above, and comprises a conically shaped head 62 with an axial slot extending through the head 62 and a short way along the distal end of arm 58, in order to provide resilience, such that when the head 62 is pushed into hole H in the bird feeder main body the conical portion momentarily collapses in an axial direction before expanding in a reverse direction to engage hole H is a snap-fit manner. While the illustrated embodiment has a single axial slot 64 two or more such slots may be used; for example 3 slots each arranged at 120° to each other. Preferably, the snap-fit engagement member 60 (at least) is made from a plastics material such as nylon or polypropylene. Optionally, this embodiment may have a pair of arcuate arms that extend outwardly sideways of the main body and that in use prevent pivotal movement of an attached bird feeder.

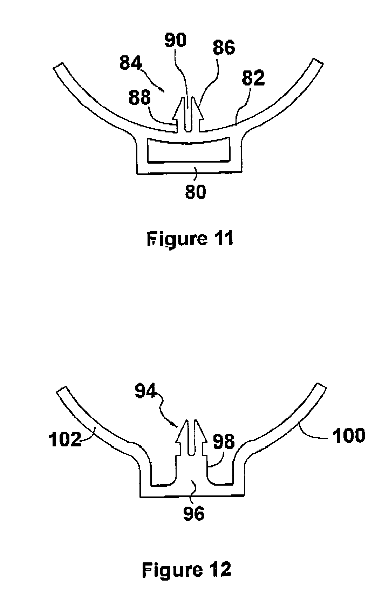

Figures 11 to 12 show two further embodiments of the invention that in use engage a single aperture or mesh hole of a conventional bird feeder body. These embodiments both employ one or more suction cups (not shown) attached to the main body; preferably using apertures similar to apertures 14 and 38 of the first and second embodiment described above.

The embodiment of Figure 11 comprises a main body portion 80, similar to main body 12 to which one or more suction cups (not shown) are attached. A curved arm 82, similar to arm 18 of the first embodiment, depends from the main body 80 and has a curvature to match that of the outer surface of a cylindrical bird feeder body that in use functions to prevent pivotal movement of an attached bird feeder. Attached to arm 82 is snap-fit engagement means 84. Engagement means 84 comprises a conically shaped head 86 attached to arm 82 by a short stem 88. An axial slot 90 is provided through head 86 and part of stem 88 in order to provide resilience, such that when the head 86 is pushed a hole in the bird feeder main body the conical portion momentarily collapses in an axial direction before expanding in a reverse direction to engage the hole in a snap-fit manner. While the present embodiment has a single axial slot 90 two or more such slots may be used; for example 3 slots each arranged at 120° to each other. Preferably, the snap-fit means 84 (at least) is made from a plastics material such as nylon or polypropylene etc.. In use, the hanger is pushed against the side wall of a cylindrical bird feeder body so that engagement means 84 locates a hole (for example one of the holes typically provided for a hanger pivot rod - in this case after removal of said rod); is pushed into the hole, and engages the hole by the snap fit action resulting from the configuration and material of fabrication.

The embodiment of Figure 12 is similar to that of Figure 11 except that engagement means 94 is attached to main body 96 via a short arm or stub 98, and that two additional arcuate arms 100 and 102 are provided; again to prevent pivoting of an attached bird feeder body about engagement means 94.

The above described embodiments of the invention may also be used with a bird feeder that comprises a main body with a open grid mesh wall. In this case the grid holes provide the necessary aperture that the hanger engages.

## Claims

1. A bird feeder hanger having a main body with at least one suction cup attached thereto and further comprising at least one arm member extending from said main body; wherein snap-fit means are provided on said arm that in use engages an aperture or grid mesh hole located in a conventional bird feeder body.

2. A hanger according to Claim 1 wherein the snap-fit means comprise a member with a head, a stem and at least one axial slot in the head and stem in order to provide resilience.

3. A hanger according to Claim 2 wherein the bead is conical or frustro-conical in shape.

4. A hanger according to any preceding claim comprising an arm or a pair of arcuate arms that extend outwardly sideways of the main body and that in use prevent pivotal movement of an attached bird feeder.

5. A hanger according to any preceding claim comprising a pair of arcuate arms that extend from the front face or side walls of the main body and in use engage diametrically opposed apertures or holes of a conventional tubular bird feeder body.

6. A hanger according to Claim 5 wherein the two arms may together form a semi-circular member.

7. A hanger according to any preceding claim comprising a main body having an elongate member with a "U-shaped" cross section.

8. A hanger according to Claim 1 comprising a single arm wherein the snap-fit means are provided that in use engage that end of said arm most distant from the main body.

9. A bird feeder comprising a hanger according to any preceding claim.
